# EUROPÄISCHE PATENTANMELDUNG

(11) **EP 1 026 379 A2**
(43) Veröffentlichungstag der Anmeldung: **09.08.2000**
(21) Anmeldenummer: 00101343.2
(22) Anmeldetag: 24.01.2000
(51) Int. Cl.: F02B 43/00, B01D 53/00, B01D 53/94

(54) **Reinigungseinrichtung zum adsorptiven Reinigen von Treibgas**

(30) Priorität: 08.02.1999 AT 15999
(71) Anmelder: Jenbacher Aktiengesellschaft, 6200 Jenbach/Tirol (AT)
(72) Erfinder: Brandt, Andreas, 6200 Buch bei Jenbach (AT); Küffmeier, Rainer, 6262 Bruck am Ziller (AT)
(74) Vertreter: Torggler, Paul Norbert

(57) **Zusammenfassung**

Reinigungseinrichtung zum adsorptiven Reinigen von Treibgas für den Antrieb eines Gasmotors, welche ein Adsorptionsmittel enthält, das insbesondere von Aktivkohle gebildet wird, wobei zur Messung der Beladung des Adsorptionsmittels mit adsorbierten Schadstoffen ein Kondensator (52) vorgesehen ist, der treibgasdurchströmtes Adsorptionsmittel als Dielektrikum enthält.

## Beschreibung

Die Erfindung betrifft eine Reinigungseinrichtung zum adsorptiven Reinigen von Treibgas für den Antrieb eines Gasmotors, welche ein Adsorptionsmittel enthält, das insbesondere von Aktivkohle gebildet wird.

Derartige Reinigungseinrichtungen werden insbesondere bei der Verwendung von Biogas als Treibgas eingesetzt, um eine Anwendung von Abgaskatalysatoren für die Abgase des Gasmotors zu ermöglichen. Durch das Adsorptionsmittel der Reinigungseinrichtung werden im Biogas enthaltende Spurenmittel herausgefiltert, welche andernfalls die Funktion des Motors und insbesondere eines eventuell montierten Abgaskatalysators in kurzer Zeit stark beeinträchtigen würden.

Da das Adsorptionsmittel, beispielsweise Aktivkohle, eine nur begrenzte Aufnahmefähigkeit für die auszufilternden Schadstoffe hat, ist es von Zeit zu Zeit nötig, entweder das Adsorptionsmittel auszutauschen oder dieses zu regenerieren, insbesondere durch Aufheizen. Um zu verhindern, daß dabei die freigesetzten Schadstoffe doch noch in den Motor gelangen, wird das Adsorptionsmittel günstigerweise während des Regenerationsvorganges mit einem Spülgas gespült, welches die freigesetzten Stoffe mitführt und das in der Folge abgefackelt wird.

Eine derartige Reinigungseinrichtung ist aus der EP 0 818 617 A1 bekannt. Es können dabei für einen einzelnen Gasmotor auch zwei Reinigungseinrichtungen vorgesehen sein, sodaß bei einem Regenerieren einer der beiden Reinigungseinrichtungen der Gasmotor mit der zweiten Reinigungseinrichtung weiterbetrieben werden kann. Ein jeweiliger Regenerationsvorgang einer Reinigungseinrichtung wird jeweils nach einer bestimmten Laufzeit des Gasmotors durchgeführt, nach der erfahrungsgemäß die Reinigungsleistung der Reinigungseinrichtung abzunehmen beginnt (was durch Messung der Restgaskomponenten im Biogas in Vorversuchen festgestellt werden kann). Da die Verunreinigung des Biogases mit Schadstoffen sehr stark variieren kann, darf das Intervall zwischen zwei Reinigungsvorgängen nicht zu groß gewählt werden, wobei aber dennoch nicht völlig ausgeschlossen werden kann, daß in Folge einer höheren Verunreinigung des Treibgases als erwartet eine Sättigung des Adsorptionsmittels schon früher erreicht wird.

Aufgabe der Erfindung ist es, das Intervall für die Standzeit des Adsorptionsmittels bzw. zwischen zwei Regenerationsvorgängen exakt zu bestimmen, um eine potentielle Gefährdung des Motors und des Abgaskatalysators in Folge einer Sättigung des Adsorptionsmittels zu verringern.

Erfindungsgemäß gelingt dies bei einer Einrichtung der eingangs genannten Art dadurch, daß zur Messung der Beladung des Adsorptionsmittels mit adsorbierten Schadstoffen ein Kondensator vorgesehen ist, der treibgasdurchströmtes Adsorptionsmittel als Dielektrikum enthält.

Die Erfindung beruht dabei auf der Erkenntnis, daß die Dielektrizitätskonstante des Adsorptionsmittels eine Funktion von dessen Beladung mit adsorbierten Stoffen ist. Es kann daher aus einer Messung der Dielektrizitätskonstante von treibgasdurchströmtem Adsorptionsmittel die Beladung des Adsorptionsmittels erfaßt und überwacht werden. Wenn als Dielektrikum eines im Adsorptionsmittel der Reinigungseinrichtung eingebetteten Kondensators treibgasdurchströmtes Adsorptionsmittel verwendet wird, kann daher aus einer Messung der Kapazität des Kondensators auf die Beladung des Adsorptionsmittels mit adsorbierten Stoffen geschlossen werden, wobei bei Erreichen einer maximal erlaubten Beladung, welche nahe bei der Sättigung des Adsorptionsmittels liegt, ein Regenerationsvorgang oder Austausch durchgeführt werden kann.

Weitere Vorteile und Einzelheiten der Erfindung werden im folgenden anhand der beiliegenden Zeichnung erläutert.

In dieser zeigen
Fig. 1 eine schematische Darstellung einer Motoranordnung, welche eine erfindungsgemäße Reinigungseinrichtung umfaßt,
Fig. 2 eine schematische Darstellung der Reinigungseinrichtung, wobei das das Adsorptionsmittel enthaltende Gehäuse in einem perspektivischen Schnitt durch die Längsmittelebene dargestellt ist und
Fig. 3 eine schematische perspektivische Darstellung eines Teiles des zur Messung der Beladung vorgesehenen Zylinderkondensators.

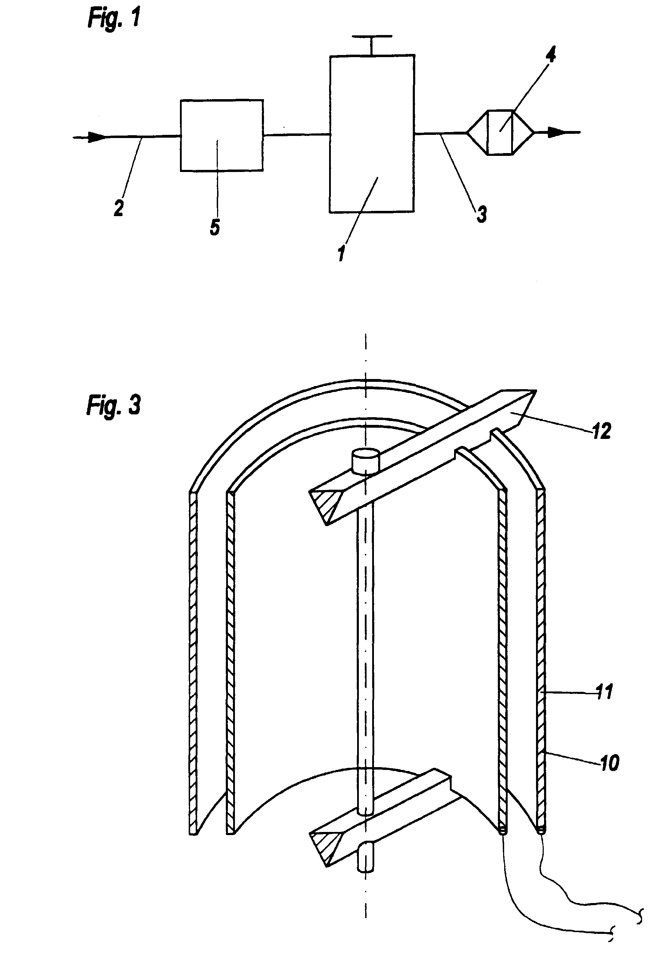

Bei der in Fig. 1 dargestellten Motoranordnung ist mit 1 schematisch ein mit Gas betriebener Verbrennungsmotor (Gasmotor) bezeichnet, der über eine Treibgaszuleitung 2 mit Biogas (insbesondere Klärgas oder Deponiegas) versorgt wird. Beim Gasmotor kann es sich insbesondere um einen großen stationären Gasmotor handeln. Im Abgastrakt 3 des Gasmotors kann ein Abgaskatalysator 4 vorgesehen werden und in der Treibgaszuleitung 2 zum Gasmotor 1 ist eine Reinigungseinrichtung 5 zum adsorptiven Reinigen des Treibgases angeordnet.

Die Reinigungseinrichtung 5 kann als Adsorptionsmittel vorteilhaft Aktivkohle enthalten. Durch den Einsatz einer solchen Reinigungseinrichtung 5 lassen sich die Standzeiten für den Motor und den Abgaskatalysator 4 wesentlich erhöhen, womit der Einsatz eines solchen Abgaskatalysators 4 bei mit Biogas betriebenen Gasmotoren erst sinnvoll möglich wird. Über den Abgaskatalysator 4 läßt sich wiederum eine Verminderung der insgesamt abgegebenen Schadstoffe erzielen.

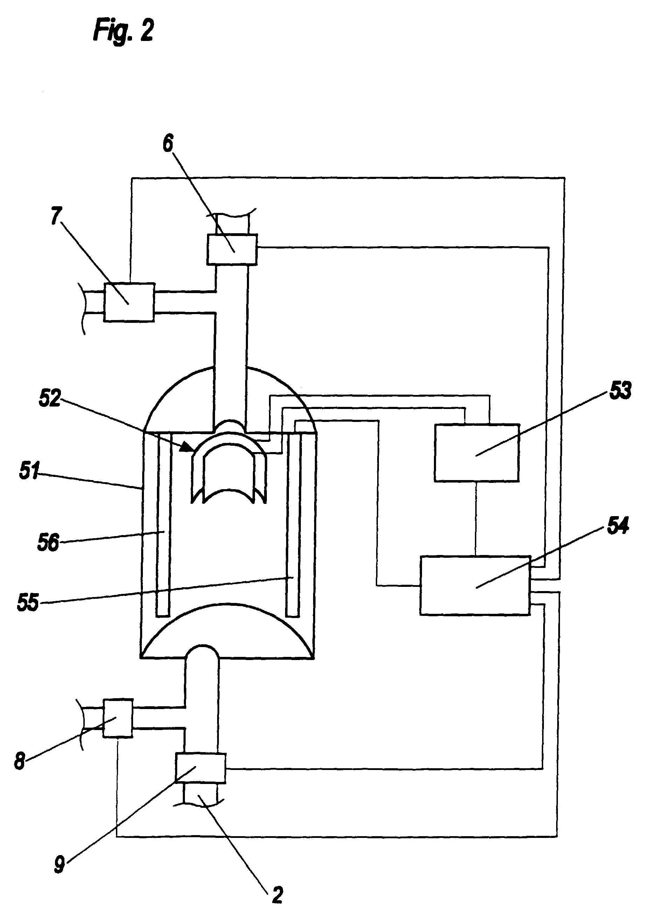

In Fig. 2 ist schematisch eine erfindungsgemäße Reinigungseinrichtung dargestellt, wobei das das Adsorptionsmittel enthaltende Gehäuse im Längsschnitt und zur besseren Darstellung der darin enthaltenen Komponenten ohne das darin enthaltene Adsorptionsmittel dargestellt ist. Dieses Gehäuse 51 kann mit Ausnahme des im folgenden zu besprechenden Kondensators 52 völlig dem in der EP 0 818 617 A1 gezeigten entsprechen und mit der dort beschriebenen Aktivkohle als Adsorptionsmittel befüllt sein. Auch der Regenerationsvorgang erfolgt in der dort beschriebenen Weise und muß hier nicht im einzelnen wiederholt werden.

Wie in Fig. 3 dargestellt, umfaßt der Zylinderkondensator die beiden zylindrischen Elektroden 10, 11, die von entsprechenden Distanzstücken 12 aus elektrisch isolierendem Material (z. B. aus Kunststoff) auf Abstand gehalten werden.

Vorteilhafterweise sind diese Distanzstücke strömungsgünstig ausgelegt. Die beispielsweise aus Stahl gefertigten Elektroden werden zum Schutz gegen Korrosion und/oder chemische Einflüsse mit einer Schutzschicht, z. B. Email, versehen.

Ein derartiger Kondensator wird entsprechend Fig. 2 im Gehäuse 51 angeordnet und ist dort im Adsorptionsmittel eingebettet, welches insbesondere den Zwischenraum zwischen den Elektroden 10, 11 des Kondensators ausfüllt und somit dessen Dielektrikum bildet. Die Dielektrizitätskonstante dieses Dielektrikums hängt dabei neben der vorliegenden Temperatur und der Frequenz der an den Kondensator angelegten Wechselspannung auch von der Beladung des Adsorptionsmittels mit adsorbierten Kompenten ab. Der Kondensator 52 ist mit einer die Dielektrizitätskonstante des Dielektrikums des Kondensators auswertenden Meßeinrichtung 53 verbunden. Diese besteht im wesentlichen aus einer mit Wechselspannung versorgten kapazitiven Meßbrücke, welche die Kapazität des Kondensators 52 bestimmt. Die Frequenz der Wechselspannung kann dabei im Bereich zwischen 10 Hz und 10 MHz liegen.

Bei der Inbetriebnahme der Reinigungseinrichtung adsorbiert zunächst die an den Bereich der Treibgaszuleitung 2 anschließende Aktivkohle den größten Teil der Schadstoffe. Erst wenn die Adsorptionsleistung dieses Teils der Aktivkohle infolge der Annäherung an ihre Sättigung nachläßt, kommt es zu einer verstärkten Beladung des ausgangsseitigen Teils der Aktivkohle, deren Annäherung an die Sättigung somit das Erreichen der insgesamt maximal möglichen Beladung der Aktivkohle anzeigt. Aus diesem Grund ist der Kondensator vorzugsweise im ausgangsseitigen Bereich der Aktivkohle angeordnet.

In einem einfachsten Ausführungsbeispiel könnte das Erreichen der maximal zulässigen Beladung von der Meßeinrichtung 53 optisch oder akustisch angezeigt werden, worauf ein Regenerationsvorgang oder Wechsel des Adsoprtionsmittels händisch durchgeführt werden könnte. Im gezeigten Ausführungsbeispiel gibt die Meßeinrichtung 53 ihr Ausgangssignal an eine Steuerungseinrichtung 54 aus. Bei Erreichen der maximal zulässigen Beladung wird von dieser ein Regenerationsvorgang automatisch ausgelöst und durchgeführt. Dazu wird (wie in der EP 0 818 617 A1 beschrieben) die Aktivkohle über die Heizelemente 55, 56 beispielsweise auf eine Temperatur zwischen 350°C und 450°C aufgeheizt. Gleichzeitig wird die Aktivkohle mit geringen Mengen eines brennbaren Spülgases, insbesondere eines gereinigten und vorgeheizten Treibgases gespült. Zu diesem Zweck werden die Ventile 6, 7, 8, 9 von der Steuerungseinrichtung 54 in entsprechender Weise betätigt. Günstigerweise können auch, wie ebenfalls in der EP 0 818 617 A1 beschrieben, zwei Reinigungseinrichtungen für einen einzelnen Gasmotor vorgesehen sein, sodaß der Gasmotor während der Regeneration einer der beiden Reinigungseinrichtungen weiter betrieben werden kann.

Anstelle eines Zylinderkondensators wäre es prinzipiell auch denkbar und möglich, einen anderen Kondensator, dessen Dielektrikum von Treibgas durchströmtem Adsorptionsmittel gebildet wird, beispielsweise einen Plattenkondensator, zu verwenden.

## Patentansprüche

1. Reinigungseinrichtung zum adsorptiven Reinigen von Treibgas für den Antrieb eines Gasmotors, welche ein Adsorptionsmittel enthält, das insbesondere von Aktivkohle gebildet wird, dadurch gekennzeichnet, daß zur Messung der Beladung des Adsorptionsmittels mit adsorbierten Schadstoffen ein Kondensator (52) vorgesehen ist, der treibgasdurchströmtes Adsorptionsmittel als Dielektrikum enthält.

2. Reinigungseinrichtung nach Anspruch 1, dadurch gekennzeichnet, daß der Kondensator (52) mit einer die Dielektrizitätskonstante des Dielektrikums des Kondensators, vorzugsweise durch Messung der Kapazität des Kondensators, auswertenden Meßeinrichtung (53) verbunden ist.

3. Reinigungseinrichtung nach Anspruch 2, dadurch gekennzeichnet, daß die Meßeinrichtung (53) zur Messung der Kapazität des Kondensators (52) von einer mit Wechselspannung versorgten kapazitiven Meßbrücke gebildet wird.

4. Reinigungseinrichtung nach Anspruch 3, dadurch gekennzeichnet, daß die Wechselspannung im Bereich zwischen 10 Hz und 10 MHz.

5. Reinigungseinrichtung nach einem der Ansprüche 1 bis 4, dadurch gekennzeichnet, daß die Elektroden (10, 11) des Kondensators (52) einen Abstand aufweisen, der im Bereich zwischen 0,5 cm und 3 cm liegt und der vorzugsweise etwa 1 cm beträgt.

6. Reinigungseinrichtung nach einem der Ansprüche 1 bis 5, dadurch gekennzeichnet, daß der Kondensator (52) ein Zylinderkondensator ist.

7. Reinigungseinrichtung nach einem der Ansprüche 1 bis 6, dadurch gekennzeichnet, daß die Reinigungseinrichtung ein Gehäuse (51) aufweist, in dem das Adsorptionsmittel angeordnet ist und daß der Kondensator (52) in diesem Gehäuse im Adsorptionsmittel eingebettet ist.

8. Reinigungseinrichtung nach einem der Ansprüche 1 bis 7, dadurch gekennzeichnet, daß der Kondensator (52) im ausgangsseitigen Bereich des Adsorptionsmittels angeordnet ist.

9. Reinigungseinrichtung nach einem der Ansprüche 1 bis 8, dadurch gekennzeichnet, daß die Kondensatorelektroden (51, 52) mit einer Schutzschicht gegen chemische Einflüsse und/oder Korrosion geschützt sind, vorzugsweise emailliert sind.

10. Reinigungseinrichtung nach einem der Ansprüche 1 bis 9, dadurch gekennzeichnet, daß eine Steuerungseinrichtung (54) vorgesehen ist, von der in Abhängigkeit von der über den Kondensator (52) gemessenen Beladung des Adsorptionsmittels ein Regenerationsvorgang automatisch auslösbar ist.

11. Motoranordnung, welche einen Gasmotor umfaßt, in dessen Abgasleitung ein Abgaskatalysator und in dessen Treibgaszuleitung eine Reinigungseinrichtung nach einem der Ansprüche 1 bis 10 angeordnet ist.

12. Verfahren zum Betreiben eines Gasmotors mit einer adsorptiven Reinigungseinrichtung für das Treibgas und einer Regenerationseinrichtung zum Regenerieren des Adsorptionsmittels der Reinigungseinrichtung, dadurch gekennzeichnet, daß zur Messung der Beladung des Adsorptionsmittels mit adsorbierten Schadstoffen die Dielektrizitätskonstante von treibgasdurchströmtem Adsorptionsmittel gemessen wird.

13. Verfahren nach Anspruch 12, dadurch gekennzeichnet, daß bei Erreichen einer vorgegebenen Höchstgrenze der Beladung ein Regenerationsvorgang des Reinigungsmittels durchgeführt wird.

14. Verfahren nach Anspruch 12 oder 13, dadurch gekennzeichnet, daß die Messung der Dielektrizitätskonstante des Adsorptionsmittels durch Messung der Kapazität eines imi Adsorptionsmittel eingebetteten Kondensators, der als Dielektrikum treibgasdurchströmtes Adsorptionsmittel enthält, gemessen wird.

15. Verfahren nach einem der Ansprüche 12 bis 14, dadurch gekennzeichnet, daß die Auslösung und Durchführung des Regenerationsvorganges von einer Steuereinrichtung (54) automatisiert vorgenommen wird.
